Europäisches Patentamt

European Patent Office

Office européen des brevets

(11) Publication number: **0 310 159 B1**

(12) **EUROPEAN PATENT SPECIFICATION**

(45) Date of publication of patent specification: **01.07.92** (51) Int. Cl.⁵: **B65H 67/06**

(21) Application number: **88201960.7**

(22) Date of filing: **08.09.88**

(54) **Method and apparatus for removing yarn bobbins and depositing them in a peg trolley.**

(30) Priority: **25.09.87 IT 2202787**

(43) Date of publication of application:
**05.04.89 Bulletin 89/14**

(45) Publication of the grant of the patent:
**01.07.92 Bulletin 92/27**

(84) Designated Contracting States:
**CH DE FR GB LI**

(56) References cited:
**WO-A-87/03274**     **DE-A- 3 244 925**
**DE-A- 3 441 778**     **DE-A- 3 627 569**
**DE-U- 8 321 639**     **US-A- 4 763 773**

(73) Proprietor: **SAVIO S.p.A.**
**Via Udine 105**
**I-33170 Pordenone(IT)**

(72) Inventor: **Galbani, Benito**
**Via Oberdan 29**
**I-33170 Pordenone(IT)**

(74) Representative: **De Carli, Erberto et al**
**ING. BARZANO' & ZANARDO MILANO S.p.A.**
**Via Borgonuovo, 10**
**I-20121 Milano(IT)**

EP 0 310 159 B1

## Description

The invention relates to a method and an apparatus for removing conical yarn bobbins from a conveyor belt and depositing the bobbins in an ordered manner on the pegs of a creel trolley.

More particularly, the invention relates to the removal of cross-wound conical bobbins originating from a textile winding machine and locating them in an ordered arrangement on the pegs of a creel trolley by which they are conveyed along lengthy paths to subsequent processing regions.

In textile, woolen or cotton mills, the removal of bobbins from winding machines or rotor spinning machines is an operation which for the purpose of further overall rationalisation should be mechanised and automated. In this respect, in spite of the very high level of machine automation, the manual operations involved in removing the bobbins from the conveyor belt and depositing them on the creel trolley can substantially damage the bobbins, leading to a loss of product quality.

In the known art, using a manual procedure the operator responsible for discharging the bobbins withdraws them from the conveyor belt and mounts them on the pegs of a creel trolley or places them in a collection bin, or alternatively the bobbins handled by the conveyor belt are poured randomly into containers located under its end. In this latter case the bobbins fall freely into the bin container, and the impact is such as to damage the outer yarn layer with consequent product quality deterioration. After this random storage, considerable labour is required to extract them for the subsequent production stages. From the aforegoing it is apparent that manual methods and plants require considerable labour, with its high inherent cost. Moreover, this represents heavy and repetitive work. Some semiautomatic or automatic devices have already been proposed in an attempt to solve the problem of discharging the completely wound bobbins from textile winding machines. For example, US-A-4 763 773 discloses an apparatus which provides essentially for the use of an elevating device for receiving bobbins withdrawn from a conveyor belt and conveying them one by one to an overhead conveyor or the like.

Overhead conveying by means of boat-shaped containers or the like requires a complicated internal transport system and a distribution system which is difficult to operate. In this respect a further complication of this apparatus for discharging bobbins from a rotor spinning machine and/or winding machine is the cost of the handling and automation system for the downstream areas to which the bobbins are being fed.

In addition, if an analysis is made of the best relationship between the conveyor belt speed, the pitch of the boat-like containers and the lifting speed of the bobbin elevator, the individual bobbin withdrawal time is found to be somewhat high and the entire system somewhat complicated and costly.

From DE-A-3 244 925 there is known a method and an apparatus of the type disclosed in the preamble of claims 1 and 2, respectively. This known method and apparatus are based on handling cylindrical bobbins by means of a forked gripper having plural parallel pins engaging the bobbins at plural peripheral positions thereof. Each bobbin is withdrawn and transferred individually, and the associated intermittent handling for discharge purposes means that the device is slow and therefore considerably penalises the production efficiency of the winding machine. It is a well known fact that while the conveyor belt is moving the winding units are unable to discharge (and therefore some are unable to produce), and thus the movement time involved in the conveyor belt discharge must be as short as possible. In order to reduce the overall time taken for discharging the bobbins from said conveyor belt and thus maximise the production of wound yarn along all the collection units of the entire winding machine it would therefore be necessary to pick up several bobbins simultaneously. Anyhow this known apparatus is not capable of handling conical bobbins.

Substantially the same drawbacks are found in the apparatus of DE-U-8 321 639, in which cylindrical bobbins are transferred individually by a manipulator device including a pin-type gripper. The pin is arranged centrally of the gripper and is expandable to grip each bobbin from inside its bore once the pin is inserted axially therein. This known apparatus cannot be used for transferring a plurality of conical bobbins at a time, because the adjacent bobbins resting on a support surface would not have their bores so aligned to allow the pin to enter therein.

The purpose of the present invention is to completely eliminate the manual operation involved in the withdrawal, transfer and orderly storage of conical bobbins and to simultaneously solve the problem of automatic manipulation of more than one conical bobbin at a time, in an optimum manner in terms of operational efficiency, constructional economy and operational reliability.

This purpose is achieved by a method having the features of claim 1 and by an apparatus having the features of claim 2. Advantageous embodiments of the apparatus are defined in dependent claims 3 to 5.

The method and apparatus proposed herein offer a series of advantages which on the one hand rationalise the withdrawal and storage of conical yarn bobbins because two or more bobbins are withdrawn and stored each time, and on the other hand considerably lighten the work of the service personnel.

In this latter respect, with the apparatus of the present invention the service personnel are required only to replace the wheel-mounted peg trolley with an empty one when filled with yarn bobbins in an ordered arrangement. This is easily done with little effort given the easy manoeuvrability and mobility of such wheel-mounted trolleys. A further advantage is that the creel trolleys can be easily unloaded by any simple manipulator, as the presence of the pegs means that the position of the bobbins is defined exactly. The entire apparatus of the present invention is simple to maintain and service, this certainly being within the scope of the service personnel. There is little possibility of mechanical faults arising as the assembly provides only two cartesian movements plus a simple angular rotation of the pin-type gripper. A further important advantage is the very low investment and maintenance cost of the entire apparatus. Adaptation to existing winding machines is possible at small expense.

With reference to the aforegoing, a preferred embodiment is described hereinafter together with the method, with reference to the accompanying drawings in which:

Figure 1 is a diagrammatic front view of the apparatus of the present invention showing the operating configuration during the conveying of the conical yarn bobbins from the main conveyor belt to the roller track of the collection station by means of the pin-type gripper while awaiting completion of preparation for withdrawal;

Figure 2 is a diagrammatic side view showing the operating configuration during the stage illustrated in Figure 1;

Figure 3 is a diagrammatic front view of the apparatus of the present invention showing the operating configuration on completion of preparation for withdrawal and the commencement of actual withdrawal of the conical bobbins by the insertion of the pin gripper into the aligned bobbin tubes;

Figure 4 is a diagrammatic side view showing the operating configuration in the condition illustrated in Figure 3;

Figure 5 is a diagrammatic side view of the apparatus of the present invention showing the operating configuration at the commencement of forced expulsion of the group of bobbins from the gripper pin for their transfer onto a storage peg of the creel trolley;

Figure 6 is a diagrammatic side view of the apparatus of the present invention showing the operating configuration after the group of bobbins has been forcibly expelled from the gripper pin and transferred onto the peg of the creel trolley;

Figure 7 is a diagrammatic isometric view of the pin-type gripper which holds and supports two conical bobbins to position them in front of the storage peg for the purpose of transferring them onto said peg by the forced action of an expulsion blade;

Figure 8 is a diagrammatic isometric view of the mechanical confrontation elements projecting between the rollers of the roller track when this latter assumes its horizontal position, to raise each conical bobbin at its minor diameter end in order to horizontally align the axes of the bobbins present one behind the other in the group.

In the figures, identical elements or elements with identical or equivalent functions carry the same reference numerals.

A pin 1 is carried by a gripper 5 for being inserted into the bobbins 8 through their central bore, to withdraw them one behind the other from their prepared position on a shelf-like collection station 10 in order to transfer them in an ordered arrangement onto pegs 24 of a creel trolley 22. A roller track 2 of cradle shape or concave V-shaped cross section supports and prepares the conical bobbins 8 on the shelf-like collection station 10, when in its downwardly inclined position 2a at rest in front of the exit of a conveyor belt 12 which feeds the bobbins 8. 2b shows the preparation roller track 2 when in its horizontal position awaiting bobbin withdrawal by the pin 1 of the gripper 5. A pendant arm or rod 3 has a lower end which rotatably carries the pin-type gripper 5. A fixed guide and connection portion 4 of inclined arrangement enables the bobbins 8 to be supported and to slide between the conveyor belt 12 and roller track 2. A photoelectric or similar sensor 6 of known type is arranged at the end of the conveyor 12 and is activated on each passage of a full yarn bobbin 8, it being associated operationally with a counter of known type. Said sensor-counter assembly measures the number of passing bobbins 8, and when said number entering the roller track 2 is equal to the programmed preparation number it stops the conveyor belt 12. A drive source 7 vertically moves the pendant arm 3 and consequently the pin-type gripper 5, whereas a drive source 9 horizontally moves the pendant arm 3 and consequently the pin-type gripper 5. 9a is an arrow indicating the direction and sense of horizontal advancement under the control action of the drive source 9 during the operating stage in which the gripper pin 1 is inserted into the aligned bores or tubes of the group of bobbins 8a, 8b. 7a is an arrow indicating the direction and sense of vertical descent of the pendant arm 3 under the control action of the drive source 7 during the stage in which the group of bobbins 8a, 8b is positioned in front of the storage peg 24 on the creel trolley 22. 7b is an arrow indicating the direction and sense of vertical lifting of the pendant arm 3 under the control action of the drive source 7 after forced expulsion of the bobbins 8a and 8b from the pin 1 and transfer onto the storage peg 24. The completely yarn-filled bobbins 8 are doffed from the spindles of the winding units and collected on the conveyor belt 12 which feeds them one after another in the direction 12a to the apparatus of the present invention. The same bobbins are designated by 8a and 8b once they have been transferred by the belt 12 to the roller track 2 in the position 2a during the stage in which the bobbins 8a and 8b are undergoing preparation for withdrawal on the collection station 10. A rod 11 of an actuator 15 serves to position the roller track 2 in positions 2a and 2b.

A blade 14 intercepts and arrests the bobbins 8a at the end of the roller track 2.

The actuator 15 consists of an actuator of pneumatic, hydraulic or electrical type or a combination of two or more of these types. 15a is an arrow indicating the direction and sense of vertical advancement of the rod 11 in angularly positioning the roller track 2 as indicated by 2a, whereas 15b is an arrow indicating the direction and sense of vertical descent of the rod 11 in horizontally positioning the roller track 2 as indicated by 2b. An upper horizontal cross-member 16 of a portal structure of the apparatus of the invention is rigidly connected to a vertical upright 18 of the portal structure of the apparatus of the present invention. Through a keyboard 19 operating data are fed in a control unit 20 based on a microprocessor, of known type, which programs the operations of the arm 3 and the gripper 5 in accordance with the instructions contained in the memory.

The end of the conveyor belt 12 is supported by the head of the textile winding machine. An actuator 26 inclines the pin 1 of the gripper 5 to an inclination equal to that of the pegs 24 by means of a rod 27. 26a and 26b are arrows indicating the movement of the rod 27 in subjecting the pin 1 to displacements of angular inclination about a supporting peg 28. An actuator 34 operates an expulsion blade 36 which expels the bobbins 8a and 8b from the pin 1 in order to locate them on the pegs 24. An arrow 36a indicates the direction and sense of forced expulsion of the bobbins by the blade 36, whereas an arrow 36b indicates the return of the blade 36 to its original position.

The gripper 5 is sustained by the pendant arm 3 through an axis 30 allowing substantially 90° rotations of the gripper 5 according to the arrows 30a and 30b for orientating the bobbins 8a and 8b from their withdrawal position to their position in front of the pegs 24 of the creel trolley 22. A support rod 32 connects the pin gripper 5 to the axis 30. An upright 29 supports the shelf-like collection station 10. Mechanical confrontation elements 38 and 39 are movable vertically and raise the conical bobbins 8a and 8b in regions close to their minor diameter to horizontally align the axes of said conical bobbins when these latter are resting on the roller track 2 in its position 2b. An actuator 40 serves for adjusting the height of the mechanical confrontation elements 38 and 39, the degree of projection of which between the rollers of the roller track 2 when in position 2b depends on the taper of the bobbins 8 to be withdrawn from the conveyor belt 12.

44 is the actuator which implements the rotations 30a and 30b.

A stop projection 42 at the end of the pin 1 prevents one or both bobbins 8a, 8b from accidentally falling off the pin 1 during their transfer from the roller track 2 when in position 2b to the pegs 24 of the creel trolley 22. The preferred embodiment of the invention is described hereinafter with reference to the figures of the accompanying drawings. The apparatus of the present invention is arranged to withdraw conical yarn bobbins 8 from a bobbin producing textile machine operating on one or more faces, and to deposit them on the pegs 24 of a wheel-mounted creel trolley 22 of the type normally used in textile mills for transporting bobbins. In a preferred application, the apparatus is arranged to be placed at the head of a rotor spinning machine or of a winding machine. Additionally, a device of known type can be provided for automatically replacing a creel trolley when full of bobbins with an empty creel trolley. If double-sided creel trolleys are used, a known device with a rotatable plate can be used for automatically changing the double loading face. When a predetermined number N of bobbins are located on the conveyor belt 12, a signal is fed to the control unit 20 of the apparatus of the present invention, and this activates the belt 12 for the discharge of the bobbins 8 lying on it. The bobbin number N is previously chosen as a submultiple of the number of bobbins to be loaded on the creel trolley, and fed into the memory. It is counted at the textile machine. The operating cycle for preparing the bobbins on the roller track 2 in the position 2a commences only when a known sensor detects the presence of the creel trolley 22 in the position awaiting filling. On receiving this signal the control unit 20 activates the drive source for driving the conveyor belt 12 with the result that this moves with its upper branch advancing in the direction and sense indicated by the arrow 12a.

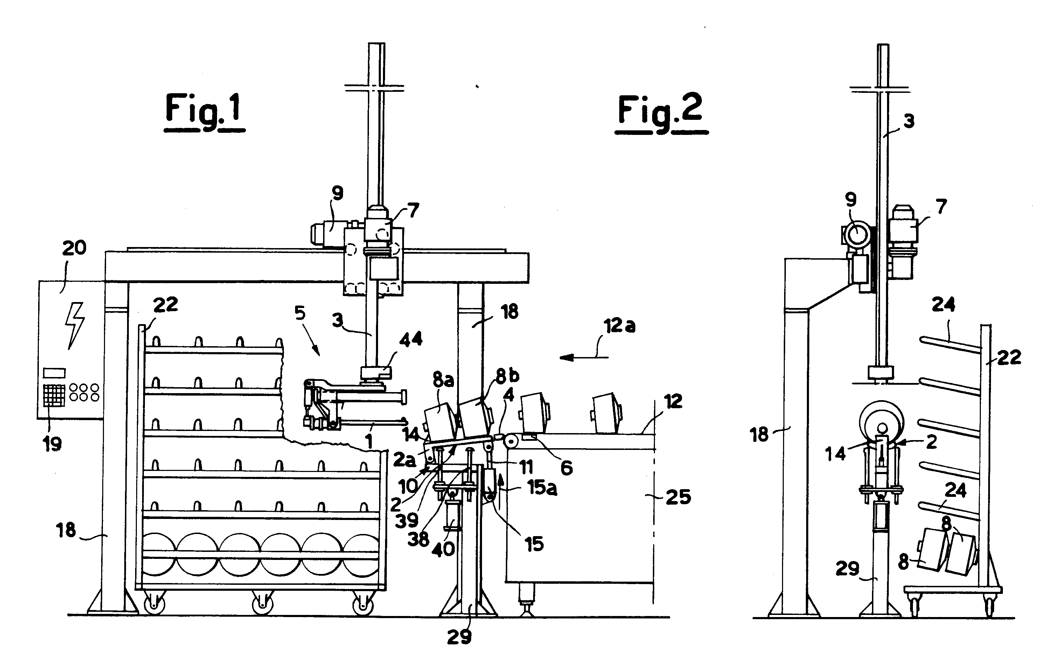

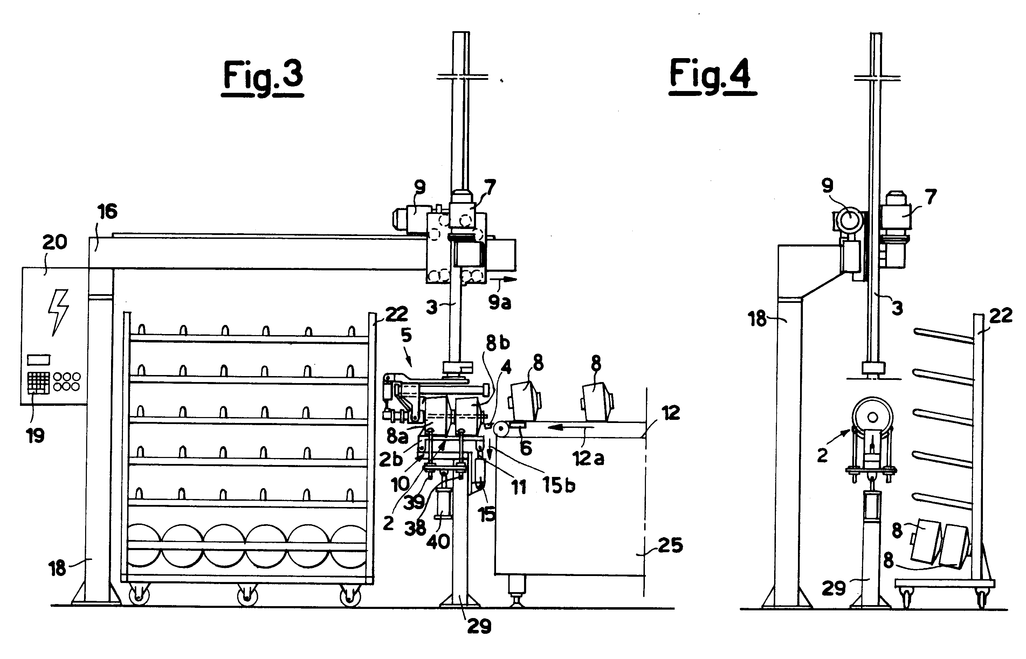

The conical bobbins 8 disengage from the conveyor belt 12 and slide axially by inertia and gravity along the fixed inclined guide section 4 and along the inclined cradle-shaped roller track 2 and abut against each other to form a group of two bobbins 8a and 8b contacting one behind the other on the roller track 2 in position 2a for their withdrawal. The interception element 14 consists of a blade which halts the bobbin 8a at the end of the roller track 2 when in the sufficiently inclined position 2a. The sensor-counter block 6 positioned in proximity to the end of the conveyor belt 12 counts the bobbins 8 which pass, and each time two pass it produces a signal which causes said conveyor belt 12 to stop. The two bobbins which have passed form on the roller track 2 inclined in position 2a a group of contacting bobbins representing a single entity for handling purposes. The formation of the group of bobbins with the roller track 2 stationed in its inclined position 2a in front of the exit of the conveyor belt 12 is illustrated diagrammatically in Figures 1 and 2.

With the conveyor belt 12 at rest, the operating cycle involving withdrawal and deposition in an ordered arrangement on the trolley pegs 24 takes place in the following operational stages:

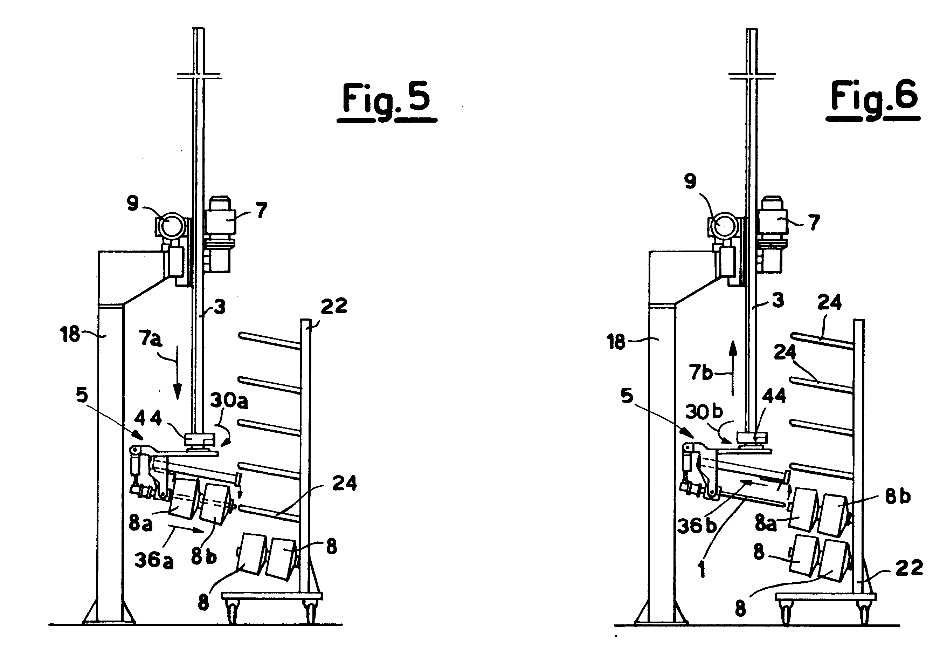

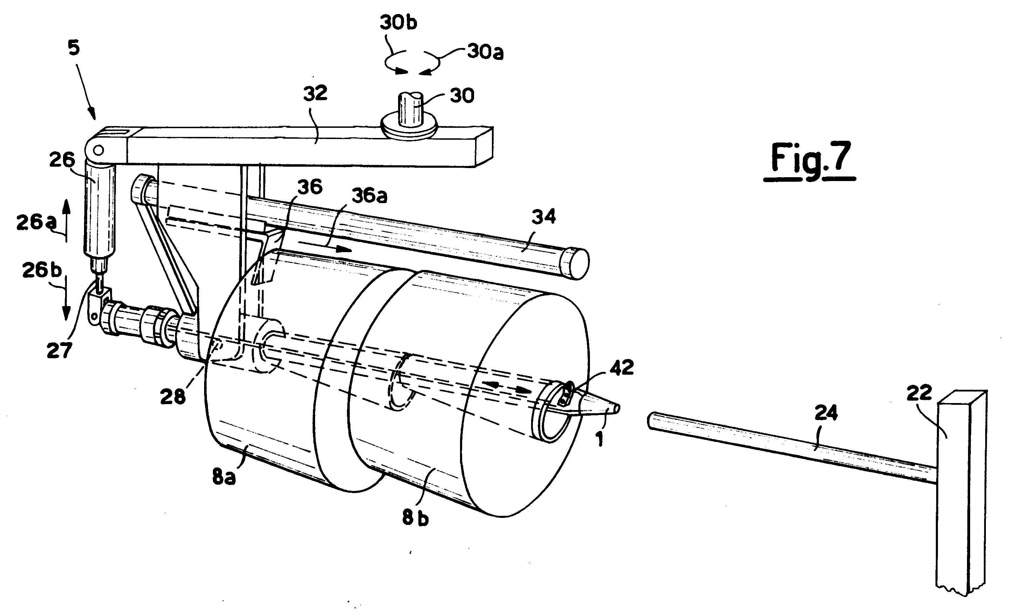

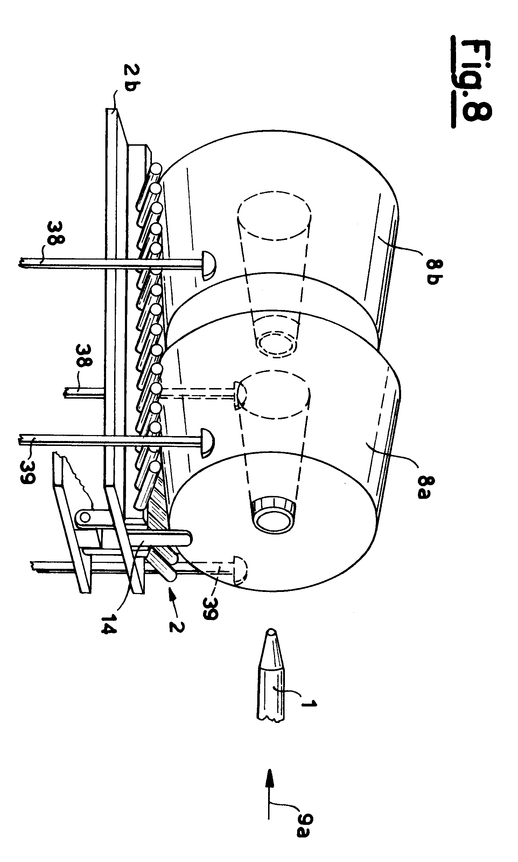

- activation of the actuator 15 so that its rod 11 angularly moves the roller track 2 to position it in the position 2b, the angular rotation being such that the roller track 2 assumes a horizontal position (see Figure 3 and Figure 4);
- confirmation by a contact microswitch or like element that the roller track 2 and thus the group of conical bobbins 8a and 8b have assumed their horizontal position. In this respect these latter are positioned with their axes aligned horizontally by the action of the mechanical confrontation elements 38 and 39 operating simultaneously with the raising of the roller track 2 (see Fig. 8). Activation of the drive source 9;
- horizontal translation of the pendant arm 3 in the direction of the arrow 9a to insert the pin 1 into the aligned bores or tubes of the group of bobbins 8a and 8b until the end of the pin 1 projects beyond the group sufficiently to enable the stop projection 42 to emerge (see Fig. 7);
- activation of the drive source 7 and vertical raising of the pendant arm 3 through a short distance sufficient to enable the group of locked bobbins 8a, 8b not to interfere with the mechanical confrontation elements 38 and 39. After this raising, the drive source 44 is activated to rotate the group of bobbins through 90° to face the trolley;
- movement of the pendant arm 3 by activating the drive sources 7 and 9, which are activated and coordinated by the control unit 20, in order to position the group of bobbins 8a and 8b such that the axis of the pin 1 is frontally aligned with the axis of a peg 24;
- activation of the actuator 26 which by moving its rod 27 inclines the pin 1 to an inclination equal to that of the deposition peg 24 (see Figure 5 and Figure 7):
- retraction of the stop projection 42;
- activation of the actuator 34, which operates the blade 36 for expelling the bobbins 8a and 8b from the pin 1 in order to locate them, by thrust action, on the peg 24 (see Figure 6).

Simultaneously with said movement of the pendant arm 3 for positioning the bobbins 8a and 8b in front of the peg 24, the actuator 15 is activated so that its rod 11 angularly displaces the roller track 2 from the horizontal position 2b to the inclined position 2a.

When this angular displacement has been made and the roller track 2 is in the position 2a extending from the exit end of the conveyor belt 12, the drive source for the conveyor belt 12 is activated so that this latter moves with its upper branch advancing in the direction and sense indicated by the arrow 12a, so as to again feed a group of bobbins 8a and 8b onto the roller track 2 when in position 2a.

When the bobbins 8a and 8b have been expelled from the pin 1 and mounted on the peg 24 in the aforesaid manner (see Figure 6), the blade 36 is returned to its initial position in the direction of the arrow 36b and the actuators 26 and 44 are simultaneously activated together with the drive sources 7 and 9 to return the pin gripper 5 to its position for withdrawing the new group of bobbins 8a, 8b which in the meantime has formed on the roller track 2 in position 2a.

The next operating cycle then proceeds, involving withdrawal followed by deposition in accordance with the new deposition coordinates associated with the position of the new peg 24. This is all coordinated by the control unit 20.

When the control unit 20 has implemented the number of operating cycles required to complete the ordered deposition of the bobbins 8, a luminous or other warning signal indicates that the creel trolley 22 is full, this signal ceasing when this latter has been replaced. A preferred embodiment has been described herein. It is however apparent that other embodiments are possible which fall within the scope of the appendant claims.

Thus different drive arrangements can be provided; it is also possible to use a single drive source instead of the two drive sources 7 and 9; it is likewise possible to add or subtract drive sources in order to advantageously coordinate the combination of the various operating stages. More than two bobbins could be gripped and transferred each time.

**Claims**

1. A method for removing conical yarn bobbins from a conveyor belt (12) and depositing the bobbins (8,8a,8b) in an ordered arrangement on pegs (24) of a creel trolley (22), wherein the bobbins (8) are fed on the conveyor belt (12) one after another after having been doffed and discharged from a bobbin producing textile machine and the method includes the steps of:
    - feeding two or more bobbins (8) onto a cradle-shaped roller guide track (2) disposed downstream of the conveyor belt (12) and inclined downwards (position 2a) such that the bobbins (8) slide axially by gravity on said track (2) and abut against each other to form a group of two or more contacting bobbins (8a,8b);
    - withdrawing the bobbins (8a,8b) from said track (2) by a pin-type gripper (5);
    - moving the gripper (5) and bringing the axis of the gripper (5) in frontal alignment with the pegs (24) of the creel trolley (22), whereby the movements are vertical, horizontal and rotational movements sequentially activated and coordinated by a control unit (20);
    - expelling the bobbins (8a,8b) from the gripper (5) in order to deposit the bobbins (8a,8b) on the pegs (24) of the creel trolley (22),
    characterised in that
    - the conical bobbins (8a,8b) on said roller guide track (2) are positioned horizontally by angularly rotating the roller guide track (2), and the bores of the bobbins (8a,8b) are simultaneously aligned axially by engaging and progressively raising each bobbin (8a,8b) of said group of bobbins in regions close to the minor diameter thereof;
    - the pin-type gripper (5) is inserted into the axially aligned bores of the group of conical bobbins (8a,8b) until the end of the pin (1) projects therefrom and a stop projection (42) emerges at the end of the pin (1) to lock the group of conical bobbins (8a,8b) axially on the pin (1);
    - the stop projection (42) is retracted when the gripper (5) is in frontal alignment with a peg (24) of the creel trolley (22).

2. An apparatus for implementing the method of claim 1, comprising a cradle-shaped roller guide track (2) disposed downstream of a conveyor belt (12) on which the bobbins (8) are fed one after another from a bobbin producing textile machine, the roller guide track (2) being inclined downwards such that the bobbins (8) slide axially by gravity on the track (2) and abut against each other to form a group of two or more contacting bobbins (8a,8b), a pin-type gripper (5) for withdrawing the bobbins (8a,8b) from said roller guide track (2), the gripper (5) being movable vertically, horizontally and rotationally between said roller guide track (2) and the pegs (24) of a creel trolley (22) in a sequence of movements controlled by a control unit (20) so that the axis of the gripper (5) is first aligned with the bores of the bobbins (8a,8b) and then with the pegs (24) of the creel trolley (22), characterised in that the roller guide track (2) is movable between said inclined position and a horizontal position, in that confrontation elements (38,39) are provided projecting between the rollers of said track (2) and movable vertically into engagement with regions of the conical bobbins (8a,8b) close to their minor diameter for simultaneously raising two or more conical bobbins (8a,8b) at said regions and aligning their bores axially, and in that a pin (1) of the gripper (5) is insertable into said aligned bores and has a stop projection (42) at the free end movable into an emerging position to axially lock the group of two or more conical bobbins (8a,8b) on said pin (1) and into a retracted position for allowing axial discharge of said group of conical bobbins (8a,8b) onto said pegs (24).

3. An apparatus as claimed in claim 2, characterised in that the gripper (5) further comprises an expulsion blade (36) slidable in the axial direction of said group of conical bobbins (8a,8b) for forcedly transferring said group of conical bobbins (8a,8b) from said pin (1) to said pegs (24).

4. An apparatus as claimed in claim 2, characterised in that the roller guide track (2) has a substantially V-shaped cross section.

5. An apparatus as claimed in claim 2 or 3, characterised in that the gripper (5) is carried by a pendant arm (3) of a portal manipulator, the arm (3) being movable horizontally and vertically and the gripper (5) being rotatable relative to the arm (3).

**Revendications**

1. Procédé pour retirer d'une courroie (12) de convoyeur des bobines de fil coniques et pour déposer les bobines (8,8a,8b) dans une disposition ordonnée sur des brochettes (24) d'un chariot-râtelier (22), dans lequel les bobines (8) sont amenées sur la courroie (12) de transporteur l'une après l'autre après avoir été levées et déchargées d'une machine textile de production de bobines et ce procédé comprend les étapes consistant :

- à amener deux ou plus de deux bobines (8) sur une piste de guidage (2) à rouleaux en forme de berceau, disposée en aval de la courroie (12) de convoyeur et inclinée vers le bas (position 2a) de telle sorte que les bobines (8) glissent axialement sous l'effet de la pesanteur sur ladite piste (2) et viennent buter l'une contre l'autre pour former un groupe de deux ou plus de deux bobines en contact (8a,8b);
- à extraire les bobines (8a,8b) de la piste (2) à l'aide d'un dispositif de préhension (5) du type à broche;
- à déplacer le dispositif de préhension (5) et à faire venir l'axe du dispositif de préhension (5) en alignement frontal avec les brochettes (24) du chariot-râtelier (22), les déplacements étant des déplacements vertical, horizontal et rotatif effectués séquentiellement et coordonnés par un dispositif de commande (20);
- à expulser les bobines (8a,8b) du dispositif de préhension (5) afin de déposer les bobines (8a,8b) sur les brochettes (24) du chariot-râtelier (22), caractérisé en ce que :
- on positionne horizontalement les bobines coniques (8a,8b) sur la piste de guidage (2) à rouleaux en faisant tourner angulairement cette piste de guidage (2) à rouleaux et on aligne simultanément dans le sens axial les trous centraux des bobines (8a,8b) en attaquant et en soulevant progressivement chaque bobine (8a,8b) dudit groupe de bobines dans des régions voisines de son petit diamètre;
- on insère le dispositif de préhension (5) du type à broche dans les trous centraux axialement alignés du groupe de bobines coniques (8a,8b) jusqu'à ce que l'extrémité de la broche (1) en face saillie et qu'une protubérance d'arrêt (42) émerge de l'extrémité de la broche (1) pour verrouiller le groupe de bobines coniques (8a,8b) axialement sur la broche (1); et
- on rappelle la protubérance d'arrêt (42) lorsque le dispositif de préhension (5) se trouve en alignement axial avec une brochette (24) du chariot-râtelier (22).

2. Appareil pour mettre en oeuvre le procédé de la revendication 1, comprenant une piste de guidage (2) à rouleaux et en forme de berceau disposée en aval d'une courroie (12) de convoyeur sur laquelle les bobines (8) sont amenées l'une après l'autre à partir d'une machine textile de production de bobines, la piste de guidage (2) à rouleaux étant inclinée vers le bas de telle sorte que les bobines (8) glissent axialement sous l'effet de la pesanteur sur la piste (2) et viennent buter l'une contre l'autre de manière à former un groupe de deux ou plus de deux bobines (8a,8b) en contact, un dispositif de préhension (5) du type à broche pour extraire les bobines (8a,8b) de la piste de guidage (2) à rouleaux, le dispositif de préhension (5) pouvant être déplacé verticalement, horizontalement et en rotation entre la piste de guidage (2) à rouleaux et les brochettes (24) d'un chariot-râtelier (22) au cours d'une séquence de déplacement commandée par un dispositif de commande (20), de telle sorte que l'axe du dispositif de préhension (5) soit tout d'abord aligné avec les trous centraux des bobines (8a,8b) puis avec les brochettes (24) du chariot-râtelier (22), caractérisé en ce que la piste de guidage (2) à rouleaux peut être déplacée entre ladite position inclinée et une position horizontale, en ce que des éléments de confrontation (38,39) font saillie entre les rouleaux de la piste (2) et peuvent être déplacés verticalement de manière à venir en contact avec des régions des bobines coniques (8a,8b) au voisinage de leur petit diamètre pour soulever simultanément deux ou plus de deux bobines coniques (8a,8b) à l'endroit desdites régions et pour aligner axialement leurs trous centraux et en ce qu'une broche (1) du dispositif de préhension (5) peut être insérée dans lesdits trous centraux alignés et comporte à son extrémité libre une saillie d'arrêt (42) qui peut être déplacée de manière à venir en position sortie pour verrouiller axialement le groupe de deux ou plus de deux bobines (8a,8b) sur ladite broche (1) et dans une position rappelée pour permettre un déchargement axial dudit groupe de bobines coniques (8a,8b) sur les brochettes (24).

3. Appareil selon la revendication 2, caractérisé en ce que le dispositif de préhension (5) comprend, en outre, une lame d'expulsion (36) pouvant coulisser dans la direction axiale dudit groupe de bobines coniques (8a,8b) pour transférer de force le groupe de bobines coniques (8a,8b) depuis la broche (1) jusqu'aux brochettes (24).

**4.** Appareil selon la revendication 2, caractérisé en ce que la piste de guidage (2) à rouleaux a une section droite sensiblement en forme de V.

**5.** Appareil selon les revendications 2 ou 3, caractérisé en ce que le dispositif de préhension (5) est supporté par un bras suspendu (3) d'un manipulateur à portique, le bras (3) pouvant être déplacé horizontalement et verticalement et le dispositif de préhension (5) pouvant tourner par rapport au bras (3).

**Patentansprüche**

**1.** Verfahren zum Entfernen von konischen Garnspulen von einem Förderband (12) und zum Ablegen der Spulen (8, 8a, 8b) in geordneter Anordnung auf Zapfen (24) eines Spulenwagens (22), wobei die Spulen (8) dem Förderband (12) nacheinander zugeführt werden, nachdem sie abgezogen und von einer spulenerzeugenden Textilmaschine abgegeben worden sind, und wobei das Verfahren die Schritte umfaßt:
- Zuführen von zwei oder mehr Spulen (8) auf einer wiegenförmigen Rollenführungsbahn (2), die stromabwärts des Förderbandes (12) angeordnet und nach unten geneigt ist (Position 2a), derart, daß die Spulen (8) axial durch Schwerkraft auf der Bahn (2) gleiten und aneinander anschlagen, um eine Gruppe von zwei oder mehr kontaktierenden Spulen (8a, 8b) zu bilden;
- Entfernen der Spulen (8a, 8b) von der Bahn (2) durch einen stiftartigen Greifer (5);
- Bewegen des Greifers (5) und Versetzen der Achse des Greifers (5) in frontale Ausrichtung mit den Zapfen (24) des Spulenwagens (22), wobei die Bewegungen, die vertikale Bewegungen, horizontale Bewegungen und Drehbewegungen sind, nacheinander durch eine Steuereinheit (20) aktiviert und koordiniert werden;
- Abwerfen der Spulen (8a, 8b) vom Greifer (5), um die Spulen (8a, 8b) auf den Zapfen (24) des Spulenwagens (22) abzulegen,
  dadurch gekennzeichnet, daß
- die konischen Spulen (8a, 8b) auf der Rollenführungsbahn (2) durch winkelförmiges Drehen der Rollenführungsbahn (2) horizontal positioniert werden und die Bohrungen der Spulen (8a, 8b) gleichzeitig axial ausgerichtet werden, indem jede Spule (8a, 8b) der Gruppe von Spulen in Bereichen nahe dem kleineren Durchmesser derselben ergriffen und fortschreitend angehoben werden;
- der stiftartige Greifer (5) in die axial ausgerichteten Bohrungen der Gruppe von konischen Spulen (8a, 8b) eingeführt wird, bis das Ende des Stiftes (1) daraus hervorragt und ein Stopvorsprung (42) am Ende des Stiftes (1) hervortritt, um die Gruppe von konischen Spulen (8a, 8b) axial auf dem Stift (1) zu verriegeln;
- der Stopvorsprung (42) zurückgezogen wird, wenn der Greifer (5) sich in frontaler Ausrichtung mit einem Zapfen (24) des Gatterwagens (22) befindet.

**2.** Vorrichtung zum Durchführen des Verfahrens nach Anspruch 1, mit einer wiegenförmigen Rollenführungsbahn (2), die stromabwärts eines Förderbandes (12) angeordnet ist, auf welchem die Spulen (8) nacheinander von einer spulenerzeugenden Textilmaschine zugeführt werden, wobei die Rollenführungsbahn (2) derart nach unten geneigt ist, daß die Spulen (8) axial durch Schwerkraft auf der Bahn (2) gleiten und aneinander anschlagen, um eine Gruppe von zwei oder mehr kontaktierenden Spulen (8a, 8b) zu bilden, wobei ein stiftartiger Greifer (5) zum Entfernen der Spulen (8a, 8b) von der Rollenführungsbahn (2) vorgesehen ist, welcher Greifer (5) vertikal, horizontal und drehbewegbar zwischen der Rollenführungsbahn (2) und den Zapfen (24) eines Spulenwagens (22) in einer Folge von Bewegungen bewegbar ist, die von einer Steuereinheit (20) derart gesteuert werden, daß die Achse des Greifers (5) zuerst mit den Bohrungen der Spulen (8a, 8b) und dann mit den Zapfen (24) des Spulenwagens (22) ausgerichtet wird, dadurch gekennzeichnet, daß die Rollenführungsbahn (2) zwischen der geneigten Stellung und einer Horizontalstellung bewegbar ist, daß Konfrontationselemente (38, 39) vorgesehen sind, die zwischen die Rollen der Bahn (2) ragen und vertikal in Eingriff mit Bereichen der konischen Spulen (8a, 8b) nahe deren kleineren Durchmessers bewegbar sind, um gleichzeitig zwei oder mehr konische Spulen (8a, 8b) in diesen Bereichen anzuheben und ihre Bohrungen axial auszurichten, und daß ein Stift (1) des Greifers (5) in die ausgerichteten Bohrungen einführbar ist und einen Stopvorsprung (24) am freien Ende hat, der in eine vorragende Position bewegbar ist, um die Gruppe von zwei oder mehr konischen Spulen (8a, 8b) axial auf dem Stift (1) zu verriegeln, und in eine zurückgezogene Stellung bewegbar ist, um eine axiale Abgabe der Gruppe von konischen Spulen (8a, 8b) auf die Zapfen (24) zu gestatten.

3. Vorrichtung nach Anspruch 2, dadurch gekennzeichnet, daß der Greifer (5) ferner eine Auswerferklinge (36) aufweist, die in axialer Richtung der Gruppe von konischen Spulen (8a, 8b) gleitverschieblich ist, um die Gruppe von konischen Spulen (8a, 8b) von dem Stift (1) auf die Zapfen (24) zwangsüberzuführen.

4. Vorrichtung nach Anspruch 2, dadurch gekennzeichnet, daß die Rollenführungsbahn (2) im wesentlichen V-förmigen Querschnitt hat.

5. Vorrichtung nach Anspruch 2 oder 3, dadurch gekennzeichnet, daß der Greifer (5) von einem Hängearm (3) eines Portalmanipulators getragen ist, wobei der Arm (3) horizontal und vertikal bewegbar und der Greifer (5) relativ zum Arm (3) drehbar ist.

Fig.1

Fig.2

Fig.3

Fig.4

**Fig.5**

**Fig.6**

Fig.7

EP 0 310 159 B1

**Fig.8**